Europäisches Patentamt

European Patent Office

Office européen des brevets

(11) Veröffentlichungsnummer: **0 171 540**
**B1**

(12) **EUROPÄISCHE PATENTSCHRIFT**

(45) Veröffentlichungstag der Patentschrift:
30.08.89

(21) Anmeldenummer: 85107370.0

(22) Anmeldetag: 14.06.85

(51) Int. Cl.⁴: **G 06 K 19/08**, B 42 D 15/02,
G 11 B 5/80

(54) **Prägefolie, insbesondere Heissprägefolie mit einer Magnetschicht.**

(30) Priorität: 20.06.84 DE 3422910

(43) Veröffentlichungstag der Anmeldung:
19.02.86 Patentblatt 86/08

(45) Bekanntmachung des Hinweises auf die Patenterteilung: 30.08.89 Patentblatt 89/35

(84) Benannte Vertragsstaaten:
AT BE CH FR GB IT LI NL SE

(56) Entgegenhaltungen:
EP–A– 0 145 473
FR–A– 2 129 198
FR–A– 2 364 525
GB–A– 2 044 175
US–A– 4 092 526
US–A– 4 146 664
US–A– 4 376 006
TELECOM REPORT, Band 2, Nr. 6, Dezember 1979,
Seiten 428-432, München; A. STAIMER: "Holocheque
- ein System zur Ausweissicherung"

(73) Patentinhaber: LEONHARD KURZ GMBH & CO.
Schwabacher Strasse 482
D-8510 Fürth/Bayern (DE)

(72) Erfinder: Der Erfinder hat auf seine Nennung verzichtet

(74) Vertreter: LOUIS, PÖHLAU, LOHRENTZ & SEGETH
Kesslerplatz 1 Postfach 3055
D-8500 Nürnberg (DE)

## Beschreibung

Die Erfindung betrifft eine Prägefolie, insbesondere Heissprägefolie, bestehend aus einer Trägerfolie und einer von dieser ablösbaren Übertragungslage, welche wenigstens eine Magnetschicht aus einer Dispersion magnetisierbarer Teilchen in einem Bindemittel aufweist, die gegebenenfalls auf ihrer der Trägerfolie abgekehrten Seite eine zur Festlegung der Übertragungslage an einem Substrat dienende Klebeschicht sowie auf ihrer zur Trägerfolie weisenden Seite eine Schutzlackschicht trägt.

Aus der am 08.03.1983 veröffentlichten US-PS 43 76 006 ist es bei einer derartigen Prägefolie bekannt, auf der zur Trägerfolie weisenden Seite der Magnetschicht eine Metallschicht und eine Lackschicht vorzusehen. Durch diese Ausbildung soll die Möglichkeit geschaffen werden, eine Magnet-Prägefolie auch in ansprechenden, hellen Farben zu gestalten, wozu die im allgemeinen dunkle Magnetschicht von der Metallschicht abgedeckt wird. Mit einem derartigen Vorgehen werden rein dekorative Zwecke verfolgt.

Es ist üblich, beispielsweise Scheckkarten, Kreditkarten, Sparkassenbücher und ähnliche Sicherheitsträger mit Magnetstreifen, signierbaren Streifen oder optisch in besonderer Weise wirksame Musterungen zu versehen, um auf diese Weise die Möglichkeit zu bieten, gewisse Daten zu speichern bzw. die Fälschungssicherheit zu erhöhen. Ein Vorteil bei der Verwendung von Magnetstreifen besteht dabei darin, daß es sehr leicht möglich ist, eine entsprechende Speicherung relevanter Daten in dem Magnetstreifen vorzunehmen. Nachteilig hierbei ist jedoch, daß bei den üblichen Magnetstreifen in verhältnismäßig einfacher Weise eine Löschung bzw. Verfälschung vorgenommen werden kann. Dies gilt grundsätzlich unabhängig davon, in welcher Weise der Magnetstreifen aufgebracht wird. Für eine Vielzahl von Anwendungsgebieten hat es sich allerdings als günstig herausgestellt, wenn man die Magnetstreifen mittels Prägefolien, insbesondere Heissprägefolien aufbringt, weil dann die Anbringung auf dem Sicherheitsträger leicht möglich ist und gegebenenfalls sogar eine Codierung des Magnetstreifens vor Aufbringung auf dem Sicherheitsträger erfolgen kann. Eine derartige Anbringung eines Magnetstreifens auf einem Träger mittels einer Prägefolie ist beispielsweise aus der US-A-4 376 006 bekannt.

Um die Fälschungssicherheit von Dokumenten bzw. Sicherheitsträgern mit Magnetstreifen zu erhöhen, wurden bereits verschiedene Versuche unternommen. Bei einem bekannten Verfahren geht man dabei so vor, daß in der Beschichtung des Magnetbandes ein unter einem Winkel von 45° gegenüber der Längsrichtung ausgerichtetes Muster der magnetisierbaren Pigmente erzeugt wird. Dieses 45°-Grundmuster der Magnetisierung läßt sich mit dem für Fälschungen üblicherweise vertretbaren Aufwand nicht ändern.

Eine weitere Möglichkeit ist die der Verwendung eines 2-Schichten-Magnetbandes, wobei eine Schicht eine hohe Koerzitivkraft hat, d.h. schwer veränderbare Informationen trägt, während bei der anderen, üblicherweise oben liegenden Schicht die löschbaren Daten mit niedriger Koerzitivkraft eingegeben werden. Derartige 2-Schicht-Magnetbänder sind aber vergleichsweise schwer herzustellen und auch problematisch zu codieren.

Es wurde weiter bereits versucht, die Magnetschicht von Magnetbändern mit speziellen grafischen Darstellungen zu versehen, die aus pigmentierten Lacken bestehen, wobei sowohl im sichtbaren als auch nur im unsichtbaren Licht erkennbare Pigmente eingesetzt wurden. Bei einem derartigen Vorgehen ergibt sich jedoch der Nachteil, daß die pigmentierten Schichten eine verhältnismäßig hohe Dicke haben müssen, so daß die Magnetschicht ebenfalls, um eine ausreichende Signalspannung zu erzeugen, verhältnismäßig dick sein muß. Prägefolien mit sehr dicker Magnetschicht und zudem einer dicken, pigmentierten Schicht, lassen sich aber nur mit Schwierigkeiten sauber verarbeiten. Es ist weiter zu berücksichtigen, daß, um eine Folie codieren zu können, deren Oberfläche sehr eben sein muß. Auch dies ist bei Verwendung pigmentierter Lacke für die Erzeugung der eine Fälschung verhindernden Muster nicht gewährleistet, da sich eine vergleichsweise wellige Oberfläche ergibt. Diese hohe Welligkeit der Oberfläche hat auch den Nachteil, daß sich zwangsläufig ein vergleichsweise großer Abstand zwischen der Magnetschicht und dem Lesekopf ergibt, somit wiederum eine Reduktion der Signalspannung. Außerdem besteht die Gefahr, daß eine rauhe Oberfläche zu einer frühzeitigen Beschädigung des Lesekopfes der entsprechenden Lesegeräte führt.

Aus der US-A-4 092 526 ist es bekannt, eine erhöhte Fälschungssicherheit dadurch zu erzielen, daß zusätzlich zu einem Magnetstreifen in einer Prägefolie weitere Elemente vorgesehen sind. Bei der bekannten Prägefolie werden hierzu unterhalb des Magnetstreifens Metallflächen eingearbeitet, die Strahlungsenergie, insbesondere ultrarote Strahlung, reflektieren. Durch die Größe und Gestaltung dieser Elemente kann eine zusätzliche Kennzeichnung erfolgen, wobei allerdings eine Auswertung dieser Kennzeichnung nur mittels spezieller Geräte möglich ist, die in der Lage sind, Lage und Größe der verdeckten Elemente festzustellen.

Schließlich wurde auch bereits versucht, zur Kennzeichnung von Sicherheitsunterlagen beugungsoptisch wirksame Musterungen, insbesondere holografisch wirksame Musterungen zu verwenden, wobei bisher diese Musterungen allerdings überwiegend direkt in aus Kunststoff bestehende Karten eingeprägt wurden. In der GB-A-2 044 175 ist grundsätzlich eine derartige Karte beschrieben. Dabei wird allerdings so vorgegangen, daß die beugungsoptisch wirksame Musterung mittels eines Laserstrahles eingebrannt wird, wodurch sich an der Oberfläche der Karte deutliche Erhebungen bzw. Vertiefungen ergeben, welche z. B. ein Beschreiben der Karte im Bereich der beugungsoptisch wirksamen Musterung erschweren.

Allerdings wurde auch bereits versucht, Prägefolien mit holografisch wirksamen Beugungsmustern (Phasenhologrammen) auszustatten, wobei neben den Beugungsmusterungen in den Prägefolien bisher keinerlei weitere Kennzeichen enthalten waren. Die Verwendung derartiger beugungsoptisch wirksamer Musterungen ergibt eine hohe Fälschungssicherheit, weil beim Versuch des Ablösens der entsprechenden Folie die beugungsoptisch wirksame Musterung zerstört wird. Die Beugungsmusterung ist leicht maschinell mittels Laser oder LEDS zu lesen. Es gibt aber auch solche Hologramme, die mit bloßem Auge erkennbar sind. Durch besondere Anordnung, insbesondere in Reflexionshologrammen, läßt sich darüber hinaus erreichen, daß selbst bei unterschiedlichen Beleuchtungsbedingungen in Tages- und Kunstlicht charakteristische Veränderungen der Beugungsbilder erzeugbar sind, wodurch ein visuell eindeutig erkennbares Echtheitsmerkmal für ein Dokument geschaffen werden kann. Nachteil einer derartigen Kennzeichnung ist jedoch, daß eine Veränderung der gespeicherten Kennzeichnung nicht möglich ist. Es kann höchstens eine Löschung der Beugungsmusterung über einen bestimmten Bereich vorgenommen werden, die dann aber nicht reversibel ist.

In der gem. Artikel 54 (3) zu berücksichtigenden EP-A-0 145 473 ist eine Identifikationskarte beschrieben, die an ihrer Oberseite eine mattierte Schicht aufweist, welche zur Erzeugung eines Bildes bzw. zur Wiedergabe einer Unterschrift graviert ist, wobei die Gravurschnitte die opake Deckschicht in unterschiedlicher Breite durchdringen, so daß eine dunklere, darunterliegende Schicht der Karte sichtbar wird. Diese Identifikationskarte stellt keine Prägefolie dar und ist auch nicht mittels einer Prägefolie hergestellt. Sie weist zudem keine Magnetschicht auf. Außerdem sind nicht zwei, voneinander trennbare Lagen, nämlich die Trägerfolie und eine Übertragungslage, vorgesehen. Insofern unterscheidet sich die Identifikationskarte gem. EP-A-0 145 473 grundsätzlich vom Erfindungsgegenstand.

Der Erfindung liegt nun die Aufgabe zugrunde, eine Prägefolie zu schaffen, die einerseits in der Lage ist, veränderliche Daten zu speichern, andererseits jedoch Fälschungen nahezu ausschließt, weil sie ohne Schwierigkeiten mit entsprechenden, bleibenden Echtheitsmerkmalen gekennzeichnet werden kann, wobei diese Echtheitsmerkmale an dem mittels der Prägefolie dekorierten Gegenstand sowohl maschinell als auch mit bloßem Auge sichtbar sind.

Zur Lösung dieser Aufgabe wird nach der Erfindung bei einer Folie der eingangs erwähnten Art vorgeschlagen, sie derart auszubilden, daß die Übertragungslage zwischen der Magnetschicht und der Trägerfolie mindestens eine eine beugungsoptisch, insbesondere holografisch wirksame Musterung aufnehmende Beugungsschicht umfaßt, die von einer Schutzlackschicht für die Magnetschicht gebildet ist, in die die beugungsoptisch wirksame Musterung auf der zur Magnetschicht weisenden Seite eingeprägt ist.

Gemäß der Erfindung wird somit eine Prägefolie, insbesondere Heißprägefolie geschaffen, die zum einen — in der Magnetschicht — die Speicherung veränderlicher Daten, beispielsweise des Kontostandes etc., gestattet, zum anderen aber auch ohne Schwierigkeiten die Anbringung solcher Sicherheitsmerkmale an einem Dokument ermöglicht, die nicht veränderlich sein sollen, nämlich über die beugungsoptische Musterung. Will man versuchen, die beugungsoptische Musterung der abgeprägten Folie zu ändern, wird diese im allgemeinen zerstört, wenn nicht sogar die Magnetschicht zusätzlich beschädigt. Trotz des Vorhandenseins einer beugungsoptisch wirksamen Musterung läßt sich die Folie nach der Erfindung derart ausbilden, daß die über der Magnetschicht liegenden Schichten so dünn sind, daß das von der Magnetschicht abgegebene Signal den einschlägigen Normen entspricht. Dabei hängt die zulässige Schichtdicke der Beugungsschicht wesentlich von den magnetischen Eigenschaften der Magnetschicht ab, insbesondere von der Art, dem Dispergierzustand, dem Orientierungsverhältnis, der Pigmentierungshöhe und der Schichtdicke der Magnetschicht, natürlich auch von dem verwendeten Pigment. Nachdem die Beugungsschicht verhältnismäßig dünn sein kann, können auch die üblichen, vergleichsweise dünnen Magnetschichten (Schichtdicke weniger als 10 $\mu$m) verwendet werden, was vor allem vorteilhafte Einflüsse auf die Verarbeitbarkeit der Folie sowie deren Eigenschaften, beispielsweise hinsichtlich des Zusammenhalts der Schichten, hat. Die Verwendung einer Prägefolie gemäß der Erfindung hat außerdem den Vorteil, daß sich nach dem Prägen eine sehr glatte Oberfläche ergibt, da die Glätte der Oberfläche der Prägung von der Oberfläche der Trägerfolie abhängt. Wird beispielsweise als Trägerfolie ein Polyesterfilm verwendet, so kann man davon ausgehen, daß dessen Oberflächenrauhigkeit kleiner als 1 $\mu$m ist, so daß die Qualität der geprägten Oberfläche bei einwandfreiem Prägewerkzeug weit über der geforderten Norm eines Mittelrauhwertes von höchsten 2,5 $\mu$m liegt. Die Einbindung der Beugungsschicht in eine Prägefolie hat gegenüber dem durchaus denkbaren, nachträglichen Anbringen einer Hologramme enthaltenden Schicht auf der Magnetschicht vor allem auch den großen Vorteil, daß das Ablösen der Beugungsschichten, insofern also ein Verfälschen, verständlicherweise bei der Folie nach der Erfindung wesentlich erschwert wird. Außerdem ergeben sich herstellungstechnische Vorteile, da infolge der Vereinigung des Echtheitskennzeichens mit dem Datenträger in einer Folie nur noch ein Arbeitsgang zur Aufbringung der Prägefolie erforderlich ist, während früher üblicherweise das Echtheitskennzeichen in einem Arbeitsgang, der Datenträger, beispielsweise die Magnetfolie, in einem anderen Arbeitsgang aufgebracht wurden. Eine besonders hohe Fälschungssicherheit läßt sich im übrigen dann erreichen, wenn man die in der Magnetfolie gespeicherten Daten in gewisser Weise an die beugungsoptische Struktur anpaßt, d. h. eine bestimmte Zuordnung vornimmt. In einem derartigen Falle wird dann eine Fälschung, z. B. der Daten in der Magnetschicht, rasch erkennbar. Weiterhin ist es auch möglich, in der Magnetschicht und der Beugungsschicht grundsätzlich die gleichen Daten zu speichern, in welchem Falle dann ein einfacher Vergleich der gespeicherten Daten zeigen würde, ob Fälschungen vorgenommen wurden oder nicht.

Durch die Anbringung der Beugungsschicht zwischen der Magnetschicht und der Trägerfolie wird erreicht, daß die Beugungsschicht und damit die beugungsoptisch wirksame Musterung auch mit bloßem Auge sichtbar ist. Die Verwendung der Schutzlackschicht für die Magnetschicht als Beugungsschicht zur Aufnahme der beugungsoptischen Musterung bewirkt, daß keine Vergrößerung der Dicke der erfindungsgemäß ausgebildeten Prägefolie gegenüber üblichen Magnetprägefolien erforderlich ist. Es ist auch — abgesehen vom Prägen — gegenüber üblichen Magnetprägefolien kein zusätzlicher Arbeitsgang erforderlich. Die Anbringung der beugungsoptisch wirksamen Musterung auf der zur Magnetschicht weisenden Seite der Beugungsschicht gibt zudem den Vorteil, daß die beugungsoptisch wirksame Musterung nach dem Abprägen der Folie zwar sichtbar, jedoch immer noch geschützt ist und die Folie eine einwandfreie, glatte Oberfläche aufweist.

Die beugungsoptisch wirksamen Musterungen sind insbesondere holografische Beugungsmuster. Dabei ist sowohl an sichtbare als auch an mit dem bloßen Auge oder unter normaler Beleuchtung nicht sichtbare Hologramme gedacht. Weiter spielt es im Sinne der Erfindung keine Rolle, ob die beugungsoptisch wirksamen Musterungen maschinell lesbar sind oder nicht.

Vor allem dann, wenn die beugungsoptisch wirksame Musterung mit blossem Auge sichtbar sein soll, ist es günstig, wenn auf der zur Trägerfolie weisenden Seite der Magnetschicht zwischen dieser und einer Schutzlackschicht eine Schicht eines nicht magnetisierbaren Metalls vorgesehen ist, die die beugungsoptisch wirksame Musterung zeigt, wobei die Metallschicht zweckmässig eine aufgedampfte Schicht aus Aluminium oder einer Aluminium-Legierung ist. Die Anbringung einer solchen zusätzlichen Metallschicht führt einerseits unter Umständen zu einer besseren Sichtbarkeit der optisch wirksamen Musterung. Andererseits können mit einer solchen Metallschicht weitere Effekte hinsichtlich des Aussehens des zu sichernden Dokuments erreicht werden, was für bestimmte Anwendungsgebiete von Bedeutung ist.

Kreditkarten, Scheckkarten und eine Vielzahl weiterer Sicherheitsträger sind häufig erst dann gültig, wenn sie vom Inhaber unterzeichnet werden. Da vor allem Kredit- und Scheckkarten häufig aus Kunststoff mit glatter Oberfläche bestehen, muss ein besonderes Feld zur Anbringung der Unterschrift vorgesehen werden, wobei auch bereits versucht wurde, durch spezielle Ausgestaltung des Untergrundes dieses Feldes die Fälschungssicherheit der Karte zu verbessern, z. B. durch speziellen Aufdruck, durch Verwendung einer Grundierung, die bei Radierversuchen ihre Farbe ändert oder die mit der Schreibflüssigkeit unter Farbänderung reagiert etc. Bei einem derartigen Vorgehen ist jedoch nachteilig, dass die Unterschriftsfläche in einem besonderen Arbeitsgang erzeugt werden muss. Ist nun, wie nach einer bevorzugten Ausführungsform der Erfindung vorgeschlagen wird, zwischen der Magnetschicht und der Trägerfolie eine nach dem Prägen und Ablösen der Trägerfolie die Oberfläche bildende, beschreibbare Lackschicht (Signierschicht) derart bereichsweise aufgebracht, dass die beugungsoptisch wirksame Musterung von der Seite der Signierschicht her noch erkennbar ist, so ergibt sich der Vorteil, dass mit Anbringung der Folie nach der Erfindung nicht nur eine Speichermöglichkeit für veränderliche Daten — in Form der Magnetschicht — sowie für unveränderliche Daten — in Form der beugungsoptisch wirksamen Musterung — geschaffen, sondern gleichzeitig auch die Möglichkeit geboten wird, im Bereich der Folie zu unterschreiben.

Die Ausbildung der Folie kann dabei derart sein, dass die Signierschicht in gegenüber den die beugungsoptisch wirksame Musterung aufweisenden Flächenbereichen abgegrenzten Flächenbereichen der Prägefolie vorgesehen ist, also beispielsweise eine Signierschicht zwischen zwei Hologrammen o. ä.

Wesentlich günstiger ist es jedoch, wenn die Signierschicht zwischen der Trägerfolie und der Beugungsschicht, letztere allerdings nur rasterartig überdeckend, vorgesehen ist. Es wird also bei einer derartigen Ausbildung der Folie nach der Erfindung so vorgegangen, dass zwischen der Beugungsschicht und der Trägerfolie lediglich ein Rasterdruck des beschreibbaren, die Signierschicht bildenden Lackes vorgesehen ist, so dass in den Zwischenräumen noch die Beugungsschicht durchscheint. Auf diese Weise wird einerseits eine Beschreibbarkeit im Bereich der Folie erreicht. Andererseits kann aber auch das Hologramm oder die sonstige beugungsoptisch wirksame Musterung noch erkannt werden, und zwar deswegen, weil beispielsweise bei Hologrammen und anderen, speziellen beugungsoptischen Musterungen die Möglichkeit besteht, sie so auszubilden, dass diese auch noch alle Informationen liefern, wenn ein Teil der Musterung abgedeckt ist.

Dies beruht darauf, dass jedes Flächenelement der beugungsoptischen Musterung die Gesamtheit der in der Musterung gespeicherten Informationen zu liefern vermag, allerdings dann mit verringertem Signal-Rauschabstand. Die rasterartige Überdeckung der Beugungsschicht durch die Signierschicht kann in unterschiedlicher Weise erfolgen, beispielsweise durch ein Punktraster, ein Linienraster oder aber auch in Form eines ganz speziell gestalteten Kennzeichens.

Die Aufbringung der Signierschicht nur in begrenzten Flächenbereichen würde dazu führen, dass sich eine unerwünschte Oberflächen-Welligkeit der Folie nach dem Abprägen ergibt. Um dies zu vermeiden, wird nach der Erfindung vorgeschlagen, dass die nicht von der Signierschicht abgedeckten Flächenbereiche der Magnetschicht oder der Beugungsschicht mit einer Klarlackschicht entsprechender Dicke abgedeckt sind. Diese Klarlackschicht stört ja dann die Lesbarkeit der beugungsoptisch wirksamen Musterung nicht. Besonders günstig ist es, wenn die Klarlackschicht von einem Ablöselack gebildet ist, da in einem solchen Fall darauf verzichtet werden kann, zwischen der Trägerfolie und der Signierschicht eine besondere Trennschicht einzubringen. Ausserdem hat ein solches Vorgehen den Vorteil, dass sich die Signierschicht schwerer von der Trägerfolie löst als die Klarlackschicht, was dazu führt, dass Teile der Signierschicht an der Trägerfolie hängenbleiben und eine Aufrauhung der Oberfläche der Signierschicht in einem zum Beschreiben hinreichenden Mass erfolgt.

Ist, wie nach der Erfindung weiter vorgeschlagen, die Beugungsschicht und/oder die Magnetschicht und/oder die Schutzlackschicht und/oder die Klarlackschicht und/oder die Signierschicht gefärbt, lassen sich besondere optische oder dekorative Effekte erzielen, die bei besonderen Anwendungsfällen eine Rolle spielen können.

Die Aufbringung der Lackschichten kann mittels der an sich für die Prägefolien-Herstellung bekannten Verfahren in Abhängigkeit von der Viskosität des verarbeiteten Lackes und der jeweiligen Schichtdicke erfolgen, z. B. mittels Rasterwalzen (Tiefdruck), Rollrakel, Reverse Roller, Giessen etc.

Zur Metallisierung werden ebenfalls die bekannten Verfahren eingesetzt, die ohne Pigment arbeiten, z. B. Vakuum-Aufdampfen oder Kathodenstrahlzerstäuben.

Weitere Merkmale, Einzelheiten und Vorteile der Erfindung ergeben sich aus der folgenden Beschreibung zweier bevorzugter Ausführungsbeispiele von Heissprägefolien nach der Erfindung anhand der Zeichnung. In der Zeichnung stellen dar :

Fig. 1 einen Schnitt durch eine Prägefolie mit einer Magnetschicht und einer Beugungsschicht und

Fig. 2 einen Schnitt durch eine Heissprägefolie mit einer Magnetschicht, einer Beugungsschicht und einer Signierschicht.

Die Prägefolien gemäss den gezeigten Ausführungsbeispielen umfassen jeweils eine Trägerfolie 1, die z. B. eine Stärke von etwa 19 μm hat und aus Polyethylenglykolterephthalat besteht. Auf diese Trägerfolie 1 ist eine Übertragungslage 2a bzw. 2b aufgedruckt, die von der Trägerfolie 1 abgelöst werden kann.

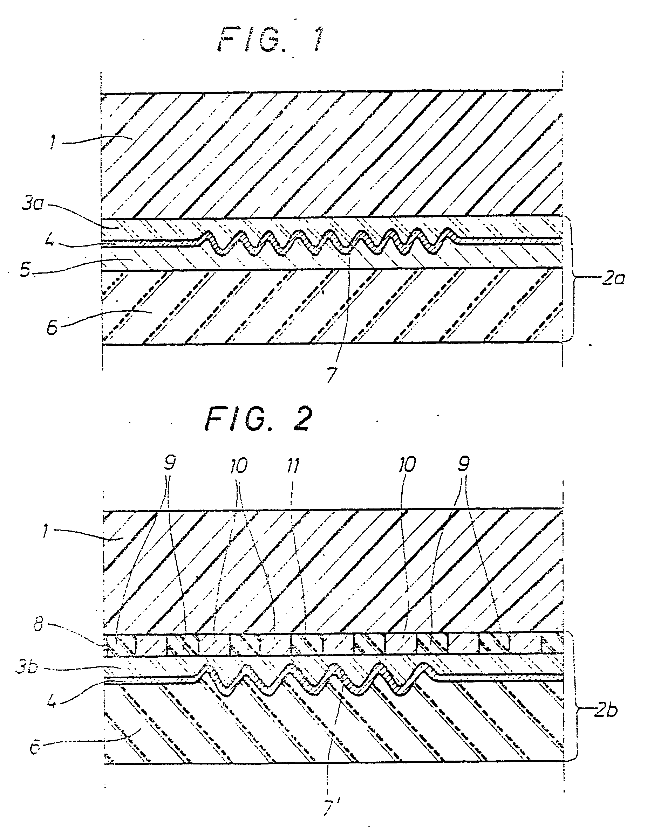

Der Unterschied der Folien gemäss Fig. 1 und Fig. 2 besteht in dem Aufbau der Übertragungslage 2a bzw. 2b.

<div align="center">Beispiel 1 (Fig. 1)</div>

Die Übertragungslage 2a umfasst, ausgehend von der Trägerfolie 1, eine gleichzeitig als Beugungsschicht dienende Schutzlackschicht 3a, eine dünne Metallschicht 4, eine Haftvermittlerschicht 5 und eine Magnetschicht 6. Die Dicke der jeweiligen Schichten ist nicht maßstabgerecht dargestellt. Beispielsweise besitzt die Schutzlackschicht 3a im Normalfall eine Dicke von 0,3 bis 1,2 μm, die Metallschicht 4 ist aufgedampft und hat eine Stärke von 0,01 bis 0,04 μm. Die Haftvermittlerschicht 5 wird üblicherweise in einer Stärke von 0,2 bis 0,7 μm aufgetragen. Die Magnetschicht hat eine Stärke von 4 bis 12 μm, vorzugsweise von etwa 9 μm.

Während die Metallschicht 4, und damit die aufeinanderzuweisenden Flächen der Schichten 3a und 5, im Randbereich der Fig. 1 im wesentlichen eben ausgebildet ist zeigt sie in der Mitte der Darstellung gem. Fig. 1 eine Musterung 7, die der Einfachheit halber wellenförmig gezeigt ist. Die Musterung 7 ist in Wirklichkeit wesentlich komplizierter und es handelt sich um eine beugungsoptisch, nämlich holografisch, wirksame Musterung.

Die einzelnen Lackschichten 3a, 5 bzw. die Magnetschicht 6 haben folgende Zusammensetzung :

Lack A (Schutzlackschicht 3a) :

| Komponente | Gew.-Teile |
|---|---|
| hochmolekulares PMMA-Harz | 2 000 |
| Silikonalkyd ölfrei | 300 |
| nichtionisches Netzmittel | 50 |
| niedrigviscose Nitrocellulose | 750 |
| Methylethylketon | 12 000 |
| Toluol | 2 000 |
| Diacetonalkohol | 2 500 |

Lack B (Haftvermittlerschicht 5)

| Komponente | Gew.-Teile |
|---|---|
| hochmolekulares PMMA-Harz | 1 200 |
| Methylethylketon | 3 400 |
| Toluol | 1 000 |
| Mattierungsmittel | 100 |

Magnetschicht 6

<div align="center">5</div>

Diese besteht aus einer Dispersion nadelförmigen $\gamma$-$Fe_2O_3$-Magnetpigments in einem Polyurethanbindemittel, verschiedenen Lackhilfsmitteln und einem Lösungsmittelgemisch aus Methylethylketon und Tetrahydrofuran. Derartige Magnetdispersionen sind an sich bekannt.

Bei Herstellung der Prägefolie gem. Fig. 1 wird wie folgt vorgegangen :

Auf die Trägerfolie, eine Polyethylenglykolterephthalat-Folie von 19 bis 23, vorzugsweise etwa 19 μm Dicke wird der oben angegebene Lack A mit einer Linienraster-Tiefdruckwalze aufgetragen, und zwar mit einem Auftragsgewicht von 2,2 g/m² nach Trocknung. Die Trocknung erfolgt im Trockenkanal bei einer Temperatur von etwa 100 bis 120 °C.

In die Lackschicht 3a wird dann bei etwa 130 °C mittels einer beispielsweise aus Nickel bestehenden Matrize die beugungsoptisch wirksame Musterung 7, im vorliegenden Fall ein Hologramm, eingeprägt. Das Einprägen geschieht abhängig von der Formel des für die Schicht 3a verwendeten Lackes zu einem unterschiedlichen Zeitpunkt. Anschliessend an das Einprägen der Musterung 7 erhärtet die Lackschicht 3a durch Vernetzung oder in sonstiger Weise.

Zum Prägen der Musterung 7 wird die Matrize vorzugsweise elektrisch aufgeheizt. Vor dem Abheben der Matrize von der Lackschicht 3a nach der Prägung kann die Matrize wieder abgekühlt werden.

Sobald die Musterung 7 eingeprägt und die Lackschicht 3a hinreichend hart ist, wird die Lackschicht 3a bei einem Druck von $1,3 \cdot 10^{-4}$ mbar mit Aluminium in einer Schichtdicke von ca. $200 \cdot 10^{-10}$ m bedampft.

Auf die Metallschicht 4 wird anschliessend die Haftvermittlerschicht 5 aus dem Lack B mit einem Auftragsgewicht von 0,4 g/m² aufgebracht und anschliessend die Magnetdispersion 6, letztere in einer Schichtdicke nach Kalandrieren von 6,5 μm.

Die Magnetschicht muss nicht unbedingt die oben aufgeführte Zusammensetzung haben. An Stelle der $Fe_2O^3$-Pigmente können z. B. auch andere Magnetpigmente, beispielsweise Co-dotierte magnetische Eisenoxide oder sonstige feindispergierte magnetische Materialien (Sr, Ba-Ferrite) verwendet werden. Die Bindemittelkombination der Magnetschicht kann gegebenenfalls auch so gewählt werden, dass auf die Haftvermittlerschicht 5 verzichtet werden kann, weil sich direkt eine gute Haftung unmittelbar auf dem Metall 4 ergibt (wie in Beispiel 2 angenommen).

Es wäre denkbar, auf die Magnetschicht 6 schliesslich noch eine Heissklebeschicht aufzubringen. Ob eine Heissklebeschicht verwendet wird oder nicht, richtet sich nach der Zusammensetzung des Substrats, auf das die Folie geprägt werden soll. Wenn das Substrat beispielsweise aus PVC besteht, wie dies bei Kreditkarten meist der Fall ist, kann normalerweise auf eine besondere Heissklebeschicht verzichtet werden.

## Beispiel 2 (Fig. 2)

Die Prägefolie gem. Fig. 2 hat eine Übertragungslage 2b, die ebenso wie die Übertragungslage 2a des Ausführungsbeispiels 1 nach Fig. 1 eine Magnetschicht 6, eine Metallschicht 4 sowie eine Schutzlackschicht 3b mit einer beugungsoptisch wirksamen Musterung 7' aufweist. Der wesentliche Unterschied der Folie gem. Fig. 2 zu der nach Fig. 1 besteht darin, dass die Folie der Fig. 2 zusätzlich mit einer ein Beschreiben ermöglichenden Schicht 8 anschliessend an die Trägerfolie 1 versehen ist.

Die Schicht 8 muss derart gestaltet sein, dass trotz ihres Vorhandenseins bei der abgeprägten Folie, d. h. wenn die Trägerfolie 1 entfernt ist, die beugungsoptisch wirksame Musterung 7' von der Seite der Trägerfolie 1 her sichtbar ist. Dies erreicht man dadurch, dass die eigentliche Signierschicht der Schicht 8 nur bereichsweise vorgesehen ist. Dabei besteht die eine Möglichkeit die Signierschicht und die beugungsoptisch wirksame Musterung 7' in räumlich streng voneinander getrennten Bereichen vorzusehen, so dass zwar die Signierschicht und die beugungsoptisch wirksame Musterung in einem Arbeitsgang auf das Substrat aufgebracht werden können, jedoch die Unterschrift an einer anderen Stelle anzubringen ist, als die Stelle, wo die beugungsoptisch wirksame Musterung angeordnet ist.

Bei dem gezeigten Ausführungsbeispiel ist es nun so, dass die weitere Schicht 8 aus zweierlei Lacken gebildet ist, nämlich einem üblicherweise nicht transparenten, beschreibbaren Lack 9, welcher rasterartig aufgetragen ist, beispielsweise als Punktraster, Strichraster etc., sowie einem weiteren, transparenten oder durchscheinenden Lack 10, der jeweils in den Zwischenräumen der mit dem Lack 9 bedeckten Bereiche vorgesehen ist. Der beschreibbare Lack 9 und der die Zwischenräume ausfüllende Lack 10 sind in etwa in gleicher Schichtdicke vorgesehen, so dass sich zu der Trägerfolie 1 hin eine in etwa ebene Oberfläche 11 ergibt. Der beschreibbare Lack 9 muss ein Pigment o. dgl. enthalten, welches hinreichend saugfähig für Tinte oder Kugelschreiber-Paste ist. Ausserdem muss die Oberfläche des Lackes 9 genügend rauh sein, um ein einwandfreies Schreiben zu ermöglichen. Trotz des Vorhandenseins eines nicht-transparenten Lackes 9 kann davon ausgegangen werden, dass die Musterung 7', vor allem wenn es sich um ein Hologramm handelt, gelesen werden kann, wenn auch mit einem schlechteren Signal-Rauschabstand, da bei Hologrammen die Möglichkeit besteht, in jedem Bereich die sämtlichen Informationen zu speichern.

Es werden folgende Lacke verwendet :

Lack A : sh. Beispiel 1

Dieser Lack wird für die Ausfüllung der Zwischenräume 10 zwischen den mit beschreibbarem Lack bedruckten Bereichen 9 verwendet.

Lack D (beschreibbarer Lack 9)

| Komponente | Gew.-Teile |
|---|---|
| PVC/PVac-Mischpolymerisat | 4 000 |
| niedrigviscose Nitrocellulose | 2 000 |
| ölfreies Alkyd | 50 |
| Silikonpolyesterharz | 2 000 |
| Verlaufmittel | 800 |
| Dioctylphthalat | 500 |
| Methylethylketon | 25 000 |
| Toluol | 2 000 |
| Ethylacetat | 2 000 |
| Cyclohexanon | 1 000 |
| Diacetonalkohol | 1 000 |
| Calciumcarbonat | 25 000 |

Lack E (Beugungsschicht 3b)

| Komponente | Gew.-Teil |
|---|---|
| Methyl-/n-Butyl-Methacrylat | 1 000 |
| niedrigviscose Nitrocellulose | 1 000 |
| Phenol-modifiziertes Kolophonium-Harz | 500 |
| Methylethylketon | 4 000 |
| Toluol | 3 000 |
| Ethylacetat | 1 500 |
| Butylacetat 98/100 | 3 000 |

Die Herstellung der Prägefolie gem. Beispiel 2 geschieht folgendermassen :

In einer 2-Farben-Druckmaschine mit einer Passungsungenauigkeit von weniger als 0,05 mm werden mit zwei Tiefdruckdekorwalzen auf eine Polyethylenglykolterephthalat-Folie von 19 μm Dicke genau ineinanderpassend die Lacke D und A gedruckt, die zunächst nach den obenerwähnten Vorschriften, jedoch mit erniedrigtem Löschungsmittelgehalt hergestellt und nach Testdrucken soweit verdünnt werden, dass die Trockenschichtdicke der beiden Lacke gerade gleichgross wird und etwa 1,5 μm beträgt. Man erhält somit auf der Folie 1 eine durchgehende Lackschicht 8 von in etwa gleicher Dicke, die aus Bereichen 9 des signierbaren Lackes D und aus anderen Bereichen 10 des Lackes A besteht, wobei der Lack A gleichzeitig die Eigenschaft hat, sich gut von der Trägerfolie 1 zu lösen, während der Lack D an der Trägerfolie gegebenenfalls haftet, so dass beim Abziehen der Trägerfolie 1 der Lack D oberflächlich abreisst und sich eine rauhe Oberfläche ergibt.

Anschliessend an das Bedrucken der Folie mit den Lacken D und A wird mit einer Linienraster-Tiefdruckwalze der Lack E in einem Flächengewicht von 1,2 g/m² aufgetragen und bei 120 °C getrocknet.

In den Lack E wird dann, wie in Beispiel 1 beschrieben, die beugungsoptisch wirksame Musterung 7' eingeprägt und anschliessend die Metallschicht 4 aufgedampft. Es kann dann, wiederum in Übereinstimmung mit Beispiel 1, eine Haftvermittlerschicht in einer Stärke von etwa 0,4 μm und anschliessend die Magnetdispersion in einer Dicke von 9 μm aufgebracht werden. Es ist jedoch auch möglich, dass, wie in Fig. 2 gezeigt, auf die Haftvermittlerschicht verzichtet wird.

Grundsätzlich wäre es auch denkbar, die beugungsoptisch wirksame Musterung 7, 7' nicht direkt in die Lackschichten 3a bzw. 6b einzuprägen, sondern erst die Metallschicht 4 anzubringen und die Musterung 7, 7' in diese einzuprägen.

Sowohl die Prägefolie gem. Fig. 1 als auch die nach Fig. 2 zeigten in üblichen Tests, dass sie den Bestimmungen der gängigen Normen für Magnet-Datenträger entsprachen. Insbesondere wurden jeweils hinreichende Signalspannungen und eine ausreichende Abriebfestigkeit erreicht.

Vorliegende Anmeldung ist eine von drei miteinander in Zusammenhang stehenden Anmeldungen, die gleichzeitig hinterlegt wurden, wobei der Gegenstand der jeweiligen Haupansprüche jedoch unterschiedlich ist. Bei den beiden anderen Anmeldungen handelt es sich um die Anmeldungen Nr. 85 107 368.4 und 85 107 369.2 (EP-A-0 166 326 bzw. EP-A-0 170 832).

## Patentansprüche

1. Prägefolie, insbesondere Heissprägefolie, bestehend aus einer Trägerfolie und einer von dieser ablösbaren Übertragungslage, welche wenigstens eine Magnetschicht aus einer Dispersion magnetisierbarer Teilchen in einem Bindemittel aufweist, die gegebenenfalls auf ihrer der Trägerfolie abgekehrten

7

Seite eine zur Festlegung der Übertragungslage an einem Substrat dienende Klebeschicht sowie auf ihrer zur Trägerfolie weisenden Seite eine Schutzlackschicht trägt, dadurch gekennzeichnet, dass die Übertragungslage (2a, 2b) zwischen der Magnetschicht (6) und der Trägerfolie (1) mindestens eine eine beugungsoptisch wirksame Musterung (7, 7') aufnehmende Beugungsschicht (3a, 3b) umfasst, die von einer Schutzlackschicht für die Magnetschicht gebildet ist, in die die beugungsoptisch wirksame Musterung (7, 7') auf der zur Magnetschicht weisenden Seite eingeprägt ist.

2. Prägefolie nach Anspruch 1, dadurch gekennzeichnet, dass die beugungsoptisch wirksame Musterung (7, 7') von einem Hologram gebildet ist.

3. Prägefolie nach einem der vorhergehenden Ansprüche, dadurch gekennzeichnet, dass auf der zur Trägerfolie (1) weisenden Seite der Magnetschicht (6) zwischen dieser und einer Schutzlackschicht (3a, 3b) eine Schicht (4) eines nicht magnetisierbaren Metalles vorgesehen ist, die die beugungsoptisch wirksame Struktur (7, 7') zeigt.

4. Prägefolie nach Anspruch 3, dadurch gekennzeichnet, dass die Metallschicht (4) eine aufgedampfte Schicht aus Aluminium oder einer Aluminium-Legierung ist.

5. Prägefolie nach einem der vorhergenden Ansprüche, dadurch gekennzeichnet, dass zwischen der Magnetschicht (6) und der Trägerfolie (1) eine nach dem Prägen und Ablösen der Trägerfolie die Oberfläche (11) bildende beschreibbare Lackschicht (9) als Signierschicht derart bereichsweise aufgebracht ist, dass die beugungsoptisch wirksame Struktur (7, 7') von der Seite der Signierschicht her noch erkennbar ist.

6. Prägefolie nach Anspruch 5, dadurch gekennzeichnet, dass die Signierschicht (9) in gegenüber den die beugungsoptisch wirksame Struktur (7, 7') aufweisenden Flächenbereichen abgegrenzten Flächenbereichen der Prägefolien vorgesehen ist.

7. Prägefolie nach Anspruch 5, dadurch gekennzeichnet, dass die Signierschicht (9) zwischen der Trägerfolie (1) und der Beugungsschicht (3, 3a), letztere nur rasterartig überdeckend, vorgesehen ist.

8. Prägefolie nach einem der Ansprüche 5 bis 7, dadurch gekennzeichnet, dass die nicht von der Signierschicht (9) abgedeckten Flächenbereiche der Magnetschicht (6) oder der Beugungsschicht (3, 3a) zur Bildung einer ebenen Oberfläche (11) der Übertragungslage (2b) mit einer Klarlackschicht (10) entsprechender Dicke abgedeckt sind.

9. Prägefolie nach Anspruch 8, dadurch gekennzeichnet, dass die Klarlackschicht (10) von einem Ablöselack gebildet ist.

10. Prägefolie nach einem der vorhergehenden Ansprüche, dadurch gekennzeichnet, dass die Beugungsschicht und/oder die Klarlackschicht (10) und/oder die Signierschicht (9) gefärbt ist.

## Claims

1. A stamping or blocking foil, in particular a hot stamping foil, consisting of a carrier foil and a transfer layer detachable therefrom, having at least one magnetic layer made of a dispersion of magnetisable particles in a binding agent, which, if required, carries on its opposite side to the carrier foil an adhesive layer serving to fix the transfer layer on a substrate, as well as on its side facing the carrier foil, a protective lacquer layer, characterized in that the transfer layer (2a, 2b) between the magnetic layer (6) and the carrier foil (1) comprises at least one diffraction layer (3a, 3b) accommodating a diffractionally effective pattern (7, 7'), which diffraction layer is formed by a protective lacquer layer for the magnetic layer, into which the diffractionally effective pattern (7, 7') is blocked in on the side facing the magnetic layer.

2. A stamping or blocking foil according to claim 1, characterized in that the diffractionally effective pattern (7, 7') is formed by a hologram.

3. A stamping or blocking foil according to one of the preceding claims, characterized in that on the side of the magnetic layer (6) facing the carrier foil (1), provision is made between said magnetic layer and a protective lacquer layer (3a, 3b) for a layer (4) of a nonmagnetisable metal which shows the diffractionally effective structure (7, 7').

4. A stamping or blocking foil according to claim 3, characterized in that the metal layer (4) is a vapour-deposited layer of aluminium or of an aluminium alloy.

5. A stamping or blocking foil according to one of the preceding claims, characterized in that between the magnetic layer (6) and the carrier foil (1), an inscribable lacquer layer (9) forming the surface (11) after the carrier foil (1) has been blocked and detached, is zonally applied as the signing layer, in such a way that the diffractionally effective structure (7, 7') is still recognizable from the side of the signing layer.

6. A stamping or blocking foil according to claim 5, characterized in that the signing layer (9) is provided in delimited areal zones of the stamping or blocking foils opposite the areal zones having the diffractionally effective structure (7, 7').

7. A stamping or blocking foil according to claim 5, characterized in that the signing layer (9) is provided between the carrier foil (1) and the diffraction layer (3, 3a), covering the latter only in the manner of a grid.

8. A stamping or blocking foil according to one of claims 5 to 7, characterized in that the areal zones of the magnetic layer (6) or of the diffraction layer (3, 3a) not covered by the signing layer (9) are covered by a clear lacquer layer (10) of a suitable thickness to form a flat surface (11) of the transfer layer (2b).

9. A stamping or blocking foil according to claim 8, characterized in that the clear lacquer layer (10) is formed by a detachable lacquer.

10. A stamping or blocking foil according to one of the preceding claims, characterized in that the diffraction layer and/or the clear lacquer layer (10) and/or the signing layer (9) is coloured.

**Revendications**

1. Feuille à marquer, en particulier feuille à marquer à chaud, constituée d'un support pelliculaire et d'une couche de transfert, pouvant être séparée de ce dernier, laquelle présente au moins une couche magnétique constituée d'une dispersion de particules magnétisables dans un liant, et qui, sur sa face opposée au support pelliculaire, porte éventuellement une couche adhésive, servant à fixer la couche de transfert sur un substrat, et aussi, sur sa face dirigée vers le support pelliculaire, une couche de vernis de protection, caractérisée en ce que la couche de transfert (2a, 2b) comprend, entre la couche magnétique (6) et le support pelliculaire (1), au moins une couche de diffraction (3a, 3b) recevant un dessin (7, 7′) ayant un effet de diffraction, et qui est formée d'une couche d'un vernis de protection de la couche magnétique, dans laquelle est incrusté, sur la face dirigée vers la couche magnétique, le dessin (7, 7′) à effet de diffraction.

2. Feuille à marquer selon la revendication 1, caractérisée en ce que le dessin (7, 7′) à effet de diffraction est formé d'un hologramme.

3. Feuille à marquer selon l'une des revendications précédentes, caractérisée en ce que, sur la face de la couche magnétique (6) dirigée vers le support pelliculaire (1), entre cette dernière et une couche de vernis de protection (3a, 3b), est prévue une couche (4) en un métal non-magnétisable, qui présente la structure à effet de diffraction (7, 7′).

4. Feuille à marquer selon la revendication 3, caractérisée en ce que la couche métallique (4) est une couche déposée par métallisation sous vide d'aluminium ou d'un alliage d'aluminium.

5. Feuille à marquer selon l'une des revendications précédentes, caractérisée en ce qu'entre la couche magnétique (6) et le support pelliculaire (1) est appliquée, par zones, une couche de vernis (9) servant de couche de marquage, sur laquelle on peut écrire, et formant après empreinte et séparation du support pelliculaire la surface (11), de telle sorte que la structure (7, 7′) à effet de diffraction puisse encore être reconnue à partir de la face de la couche de marquage.

6. Feuille à marquer selon la revendication 5, caractérisée en ce que la couche de marquage (9) est prévue dans des zones superficielles des feuilles à marquer délimitées par rapport aux zones superficielles présentant la structure (7, 7′) à effet de diffraction.

7. Feuille à marquer selon la revendication 5, caractérisée en ce que la couche de marquage (9) est prévue entre le support pelliculaire (1) et la couche de diffraction (3, 3a), en ne recouvrant cette dernière que selon un quadrillage.

8. Feuille à marquer selon l'une des revendications 5 à 7, caractérisée en ce que les zones superficielles de la couche magnétique (6) ou de la couche de diffraction (3, 3a) non recouvertes par la couche de marquage (9) sont, pour former une surface plane (11) de la couche de transfert (2b), recouvertes d'une couche de vernis transparent (10) d'épaisseur correspondante.

9. Feuille à marquer selon la revendication 8, caractérisée en ce que la couche de vernis transparent (10) est formée d'un vernis séparable.

10. Feuille à marquer selon l'une des revendications précédentes, caractérisée en ce que la couche de diffraction et/ou la couche de vernis transparent (10) et/ou la couche de marquage (9) sont colorées.

## FIG. 1

## FIG. 2